# EUROPEAN PATENT APPLICATION

(11) **EP 2 696 627 A2**
(43) Date of publication of application: **12.02.2014**
(21) Application number: 12785017.0
(22) Date of filing: 10.04.2012
(51) Int. Cl.: H04W 48/18, H04W 88/06

(54) **METHOD AND APPARATUS FOR SELECTING NETWORK IN M2M COMMUNICATION**

(30) Priority: 13.05.2011 KR 20110045273
(71) Applicant: KT Corporation, Seongnam-si, Gyeonggi-do 463-815 (KR)
(72) Inventor: CHANG, Deokmoon, Seoul 137-140 (KR); BAE, Jeongil, Seoul 137-140 (KR); KIM, Yuseon, Seoul 137-144 (KR); KIM, Euijik, Seoul 137-140 (KR); YOON, Sungsook, Seoul 137-140 (KR)
(74) Representative: Ahner, Philippe
(86) International application number: PCT/KR2012/002717
(87) International publication number: WO 2012/157849

(57) **Abstract**

The present disclosure is related to selecting a network in a machine to machine (M2M) communication. A method of selecting a network in an M2M communication according to at least one embodiment includes: transmitting, by an M2M entity, an interface resource to an M2M core, wherein the interface resource includes a service class for an M2M application and information on supportable access networks; and performing, by the M2M entity, a connection to an access network, wherein the access network is selected by the M2M core, based on (i) information included in the interface resource and (ii) at least one of a network cost and location information.

## Description

### Technical Field

The present disclosure relates to selecting a network in a machine to machine (M2M) communication. Herein, the M2M communication is a communication performed between machines. Such M2M communication may variously transmit and receive a variety of information according to a specific time or situation pattern. Accordingly, the M2M communication may be embodied differently from communications associated with a typical mobile phone and the like. The present description relates to providing a method of selecting a network such that a more efficient M2M communication can be performed, and an apparatus for implementation thereof.

### Background Art

Machine to machine (M2M) communication may be variously referred to as a machine type communication (MTC), Internet of things (IoT), a smart device communication (SDC), or a machine oriented communication (MOC). The M2M communication refers to any communication scheme which does not require human intervention in the process of communication. Meanwhile, in the M2M communication, communication patterns may differ according to markets or applications to be applied and/or corresponding services to be used. Particularly, the M2M communication may not require that a communication connection is always established. Furthermore, information or data associated with the M2M communication may be transmitted or received with or without a constant pattern. In the M2M communication having the above-described characteristics, a networking operation may be required to be efficiently performed according to (i) characteristics of a corresponding M2M entity and/or (ii) characteristics of functions (or capabilities) provided by the corresponding M2M entity. However, a method and an apparatus for implementing an efficient networking are not provided in a typical M2M communication.

### Disclosure of Invention

### Technical Problem

The present embodiment relates to implementing a network selection method for an efficient networking, and resources therefor. Furthermore, the present embodiment may enable an M2M gateway and/or an M2M device to select a network suitable for a related application.

In the case that an M2M device and/or M2M gateway have a plurality of network interfaces, the present embodiment relates to providing a relatively optimal network connection to the M2M device and/or the M2M gateway. More specifically, the present embodiment relates to a method and an apparatus for minimizing a function usage (or load) of an M2M device/gateway having a limited capability, or providing a relatively optimal communication selection function (or capability) based on an information processing function and a network selection function of M2M core capabilities.

### Technical Solution

In accordance with at least one embodiment, a method may be provided for selecting a network in a machine to machine (M2M) communication. The method may include transmitting, by an M2M entity, an interface resource to an M2M core, wherein the interface resource includes a service class for an M2M application and information on supportable access networks; and performing, by the M2M entity, a connection to an access network, wherein the access network is selected by the M2M core, based on (i) information included in the interface resource and (ii) at least one of a network cost and location information.

In accordance with another embodiment, a method may be provided for selecting a network in a machine to machine (M2M) communication. The method may include receiving an interface resource from an M2M entity, wherein the interface resource includes a service class for an M2M application to be executed by the M2M entity, and information on supportable access networks; selecting an access network to be connected by the M2M entity, based on (i) at least one of a network cost and location information and (ii) information included in the received interface resource; and performing a connection setting between the M2M entity and the selected access network by determining a parameter for a connection to the selected access network.

In accordance with still another embodiment, an apparatus may be provided for implementing an M2M entity. The apparatus may include a communication processor and a communication selection processor. The communication processor may be configured to transmit an interface resource to an M2M core. Herein, the interface resource includes a service class for an M2M application, and information on supportable access networks. The communication selection processor may be configured to control the communication processor to connect to an access network. Herein, the access network is selected by the M2M core, based on (i) information included in the interface resource and (ii) at least one of a network cost and location information.

In accordance with still another embodiment, an apparatus may be provided for implementing an M2M core. The apparatus may include a communication processor and a communication selection processor. The communication processor may be configured to receive an interface resource from an M2M entity. Herein, the interface resource includes a service class for an M2M application to be executed by the M2M entity and information on supportable access networks. The communication selection processor may be configured (i) to select an access network to be connected by the M2M entity, based on information included in the received interface resource and at least one of a network cost and location information, and (ii) to perform a connection setting between the M2M entity and the selected access network by determining a parameter for a connection to the selected access network.

### Advantageous Effects

In the present specification, service capabilities of an M2M device or gateway having a plurality of network interfaces may include storing service classes registered by applications, and supportable interface information. Meanwhile, M2M core capabilities may perform information processing and a communication selection for selecting an optimal network, according to a communication request of a corresponding application, thereby minimizing a burden on the M2M device/gateway. Furthermore, the present embodiment may select a relatively optimal access network by integrally considering information associated with an M2M device/gateway and networks, thereby performing an efficient M2M communication.

### Brief Description of the Drawings

FIG. 1 is a diagram illustrating a structure of an M2M system in accordance with at least one embodiment of the present specification.
FIG. 2 is a diagram illustrating structures between an M2M core and an M2M gateway/device in accordance with at least one embodiment of the present specification.
FIG. 3 is a diagram illustrating structures for communication selection capabilities in accordance with at least one embodiment of the present specification.
FIG. 4 is a diagram illustrating a process of connecting to one of a plurality of networks in an M2M entity in accordance with at least one embodiment of the present specification.
FIG. 5 is a diagram illustrating operations of an M2M core enabling an M2M entity to be connected to one of a plurality of networks in accordance with at least one embodiment of the present specification.
FIG. 6 is a diagram illustrating structures of service classes to which at least one embodiment of the present specification may be applied.
FIG. 7 is a diagram illustrating connections between applications and service classes to which at least one embodiment of the present specification may be applied.
FIG. 8 is a diagram illustrating structures of interface resources of an M2M entity to which at least one embodiment of the present specification may be applied.
FIG. 9 is a diagram illustrating structures of an M2M entity and an M2M core in accordance with at least one embodiment of the present specification.

### [Description of reference numerals]

210: M2M device domain
250: M2M applications
310,910: M2M device
320, 920: M2M gateway
340, 940: M2M core
810: interfaces
830: attribute of <interface>

### Mode for Carrying out the invention

Hereinafter, exemplary embodiments of the present invention will be described with reference to the accompanying drawings. In the following description, the same elements will be designated by the same reference numerals although they are shown in different drawings. Furthermore, in the following description of the present embodiment, a detailed description of known functions and configurations incorporated herein will be omitted when it may make the subject matter of the present embodiment unclear.

In addition, in describing constituent elements of the present embodiment, the terms of "a first, a second, A, B, (a), (b), or the like" may be used. Such terms are used only for distinguishing a certain constituent element from another constituent element, and do not limit an essential feature, order, or sequence of a corresponding constituent element. In the case that a certain constituent element is described as being "coupled with," "joined to," or "connected to" another constituent element, the certain constituent element may be directly coupled with or joined/connected to the another constituent element. In this case, it should be understood that a different constituent element may be "coupled," "joined," or "connected" between the constituent elements.

The present specification will be described based on 'things to things communication.' The things to things communication may be classified into such various fields as an M2M communication, a machine type communication (MTC), Internet of things (IoT), a smart device communication (SDC), a machine oriented communication (MOC), and so forth. Particularly, the present specification will be described based on the M2M communication. However, such descriptions are not limited to the M2M communication, and may be applied to all systems and structures providing 'communications between machines' (i.e., things to things communication) and communications performed between such systems.

In the present specification, a network selection may include a communication selection selecting a network for communications, and may also include selecting a variety of medium for communications other than the communication selection. In the present specification, the term "M2M entity" may correspond to a superordinate concept that includes an M2M device and an M2M gateway.

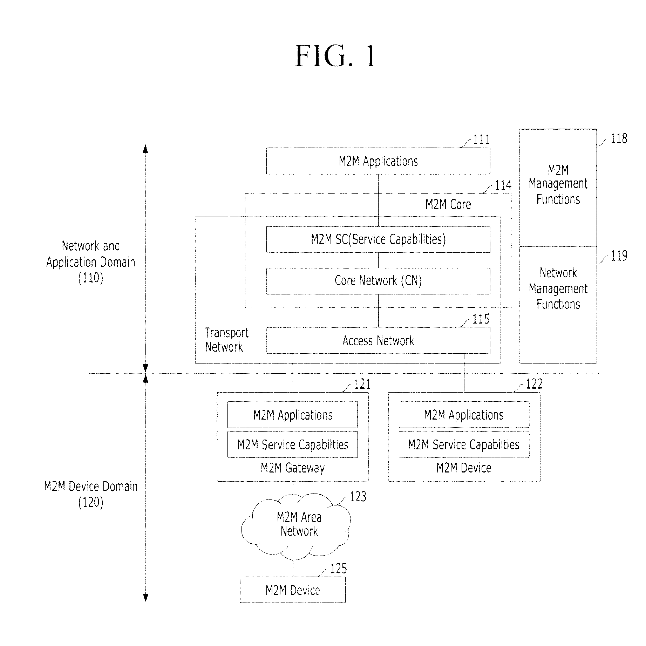

FIG. 1 is a diagram illustrating a structure of an M2M system in accordance with at least one embodiment of the present specification.

The entire architecture for an M2M communication may include 'network and application domain' (hereinafter referred to as "network/application domain") 110 and M2M device domain 120. The network/application domain 110 may include M2M applications 111, M2M core 114, access network 115, M2M management functions 118, and network management functions 119. Herein, M2M applications 111 may be accessed by M2M service capabilities (SCs) corresponding to M2M service functions, and provide service logics. M2M core 114 may include a core network (CN) and the M2M service capabilities (SCs). Access network 115 may enable communications with M2M device domain 120.

Meanwhile, M2M device domain 120 may include M2M gateway 121, M2M devices 122 and 125, and M2M area network 123. Herein, M2M devices 122 and 125 may be devices which run M2M application(s) using M2M service capabilities (SCs) and functions of the network domain. M2M devices 122 and 125 may be classified into (i) M2M device 122 including M2M applications and M2M service capabilities (SCs), and (ii) M2M device 125 not including M2M applications and M2M service capabilities (SCs).

M2M gateway 121 may include M2M service capabilities (SCs), and enable M2M devices (e.g., 122, 125) to perform operations (e.g., interworking and interconnection) in network/application domain 110.

Service capabilities (SCs) may provide functions which are to be shared by different applications. Each of M2M core 114, M2M gateway 121, and M2M devices 122 and 125 may include a specific service capability (SC).

In the structure shown in FIG. 1, M2M gateway 121 and M2M devices 122 and 125 may communicate with M2M core 114, or an M2M platform combining M2M service capabilities (SCs) of M2M core 114. M2M core 114 or the M2M platform may manage gateways and apparatuses positioned in a lower layer.

Meanwhile, in order to provide an M2M service shown in FIG. 1, M2M gateway 121 and M2M devices 122 and 125 may connect to one or more access networks (e.g., 115). In other words, M2M entities may connect to an access network(s) through one or more network access devices. Access network 115 may be at least one of a CDMA/WCDMA network, a GSM/GPRS network, a WiFi network, and a WiMax network. Accordingly, the M2M entities basically use mobile communication networks based on CDMA/WCDMA or GSM/GPRS, and may access a WiFi network or a WiMax network according to a network situation.

An M2M device/gateway having a plurality of network interfaces (e.g., WCDMA, WiFi, WiMax, and so forth) may perform a connection to an M2M access network. Hereinafter, with respect to a connection to an M2M access network, the present specification will describe embodiments implementing 'capabilities of an M2M device/gateway and/or an M2M core' for a selection of a relatively optimal access network. Herein, the selection of an optimal access network may represent an operation of selecting an access network suitable for network connection requirements of a corresponding application, according to a communication request of a device/gateway application. The capabilities of an M2M device/gateway and/or an M2M core may include (i) service capabilities of an M2M device/gateway (e.g., device communication selection (DCS) capabilities, and gateway communication selection (GCS) capabilities), and (ii) network communication selection (NCS) capabilities of an M2M core.

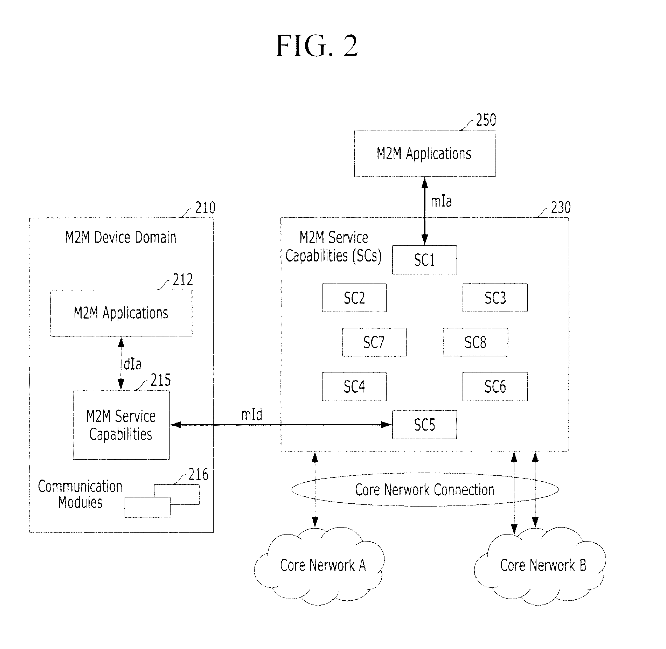

FIG. 2 is a diagram illustrating structures between an M2M core and an M2M gateway/device in accordance with at least one embodiment of the present specification.

A network architecture of FIG. 2 illustrates functional structures of an M2M device/gateway and an M2M core such that the M2M device/gateway and the M2M core may provide functions (or capabilities) for accommodation of a plurality of access networks. For this, DCS/GCS capabilities and NCS capability may be required.

In FIG. 2, M2M applications 250 may transmit and receive information in connection with M2M service capabilities (SCs) 230. M2M service capabilities (SCs) 230 may form an M2M core. A plurality of service capabilities (e.g., SC1, SC2, ..., SC8) forming M2M service capabilities (SCs) 230 may exchange information with M2M applications 250, or M2M service capabilities 215 of M2M device domain 210. That is, such service capabilities 230 may exchange information through an mId interface with M2M service capabilities 215 of M2M device domain 210. M2M device domain 210 may include such M2M entities as an M2M device and an M2M gateway. M2M applications 212 may exchange information through a dIa interface with M2M service capabilities 215.

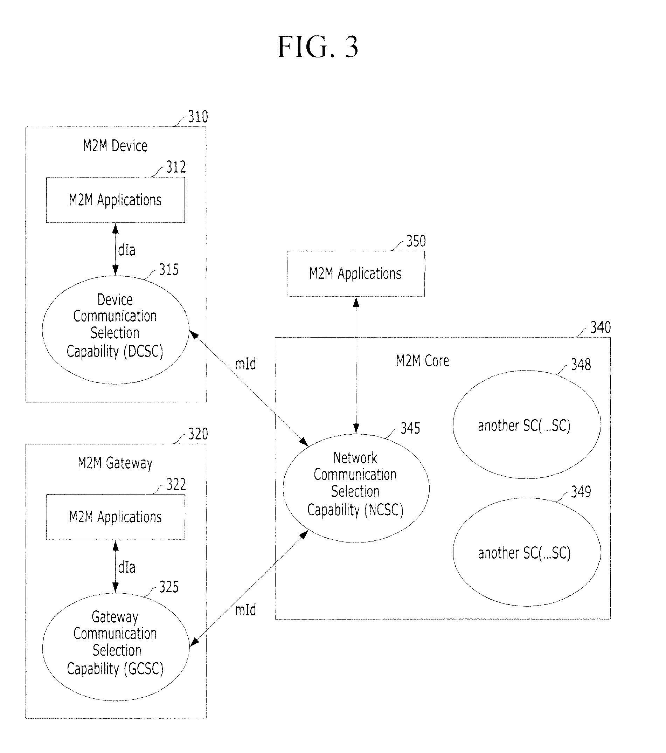

FIG. 3 is a diagram illustrating structures for communication selection capabilities in accordance with at least one embodiment of the present specification. FIG. 3 illustrates structures of DCS capabilities, GCS capabilities, and NCS capabilities.

FIG. 3 illustrates structures for implementation of a communication selection (or connection selection). More specifically, FIG. 3 illustrates architectures between 'applications' and 'communication selection capabilities' in each of and between an M2M core and an M2M gateway/device. In FIG. 3, in the case that local applications 312 and 322 are registered, communication selection capabilities 315 and 325 may be required to have service classes and to define interface resources (e.g., <interface> resource) for a plurality of networks. Herein, the communication selection capabilities 315 and 325 may form service capabilities layers (SCLs) of M2M device 310 and/or M2M gateway 320. With respect to the interface resources, attributes (e.g., types, preference, etc.) associated with access networks which can be applied to an M2M device/gateway may be defined. The interface resources will be described later.

M2M core 340 may be configured with a plurality of service capabilities (SCs) (e.g., 345, 348, and 349). In M2M core 340, network communication selection capability (NCSC) 345 may select an optimal access network, based on (i) 'a service class' or 'information on supportable (e.g., connectable) access networks' received from M2M device 310 or M2M gateway 320, (ii) location information of M2M device 310 and/or M2M gateway 320, (iii) reception intensity of access network signals at a current location, and so forth. Herein, NCSC 345 may perform communication selection functions in M2M core 340. Furthermore, NCSC 345 may perform a connection setting by determining (or setting) a 'quality of service (QoS)' parameter value which can satisfy service properties for applying service classes in a corresponding access network.

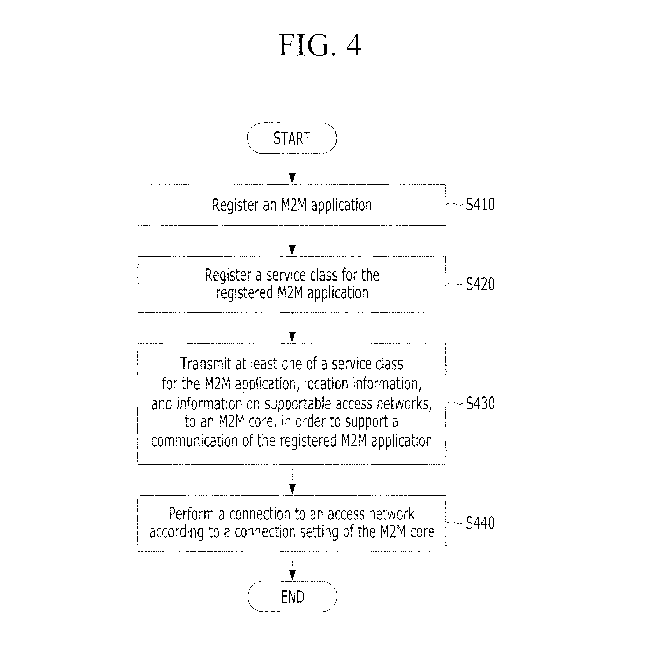

FIG. 4 is a diagram illustrating a process of connecting to one of a plurality of networks in an M2M entity in accordance with at least one embodiment of the present specification.

First, at step S410, the M2M entity may register an M2M application. As described above, the M2M entity may include an M2M device and/or an M2M gateway. Furthermore, at step S420, the M2M entity may register a service class for the registered M2M application. That is, when applications of an M2M device or an M2M gateway are registered, a service class required by an application may be registered to DCS capabilities or GCS capabilities. The expression "register to DCS capabilities or GCS capabilities" may mean that an element providing the capabilities (e.g., DCS/GCS capabilities) stores the information (e.g., service class). In this case, the information (e.g., a service class) may be stored through a database process. Hereinafter, DCS (or DCSC), GCS (or GCSC), and/or NCS (or NCSC) may include elements providing the above-described capabilities. The service class may represent information defining communication connection characteristics for transmission/reception of data or information associated with the M2M application, and will be described later.

At step S430, in order to support a communication of the registered M2M application, the M2M entity may transmit at least one of a service class for the M2M application, location information, and information on supportable access networks, to an M2M core. Herein, the location information may represent location information of the M2M entity. The information on the supportable access networks may be included in interface resources of the M2M entity. Furthermore, the information on the supportable access networks may be information on access networks which the M2M entity can support (e.g., access networks to which the M2M entity can connect), or information on access networks preferred by the M2M entity. When a corresponding M2M application is performed, DCS or GCS capabilities may transmit a corresponding service class, access network information (i.e., information on supportable access networks), and/or location information to an NCS capability of an M2M core such that an optimal communication may be selected. In other words, as described above, an M2M device or gateway corresponding to an M2M entity may support a plurality of network interfaces (e.g., two or more network interfaces). In this case, the M2M entity in the present specification may have information on supportable access networks and preference information associated with access networks. The information on supportable access networks and the preference information associated with access networks may be defined as interface resources according to at least one embodiment of the present specification, and corresponding descriptions will follow later.

The M2M core may provide network communication selection capabilities described above, or include an element providing the capabilities. Accordingly, the M2M core may select an optimal access network based on the information received at step S430. More specifically, the M2M core may select an optimal access network by analyzing service class properties, location information of an M2M device and/or an M2M gateway corresponding to M2M entities, and access network information (i.e., information on supportable access networks). Furthermore, the M2M core may perform a setting for a network connection between the M2M entity and the selected network access by setting a QoS parameter for the selected access network.

At step S440, the M2M entity may perform a connection to an access network (i.e., the selected access network) according to the connection setting of the M2M core.

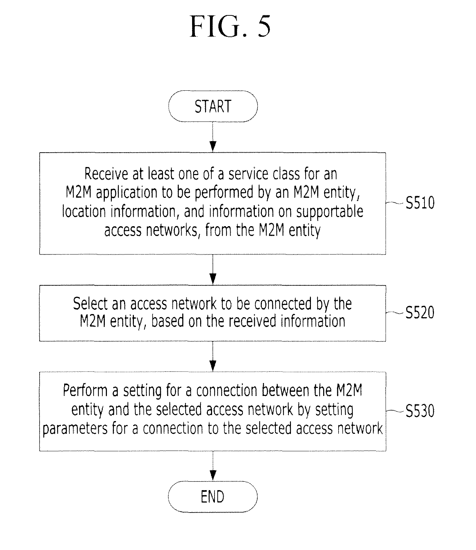

FIG. 5 is a diagram illustrating operations of an M2M core enabling an M2M entity to be connected to one of a plurality of networks in accordance with at least one embodiment of the present specification.

At step S510, the M2M core may receive at least one of (i) a service class for an M2M application to be performed by the M2M entity, (ii) location information, and (iii) information on supportable access networks, from the M2M entity. Such information may be transmitted from DCS or GCS capabilities of the M2M entity, and be received by an NCS capability of the M2M core. As described in FIG. 4, the service class may represent information defining communication connection characteristics for transmission/reception of data or information associated with the M2M application. The location information may be information on location of the M2M entity. The information on the supportable access networks may be included in interface resources of the M2M entity. Furthermore, the information on the supportable access networks may be information on access networks which the M2M entity can support, or information on access networks preferred by the M2M entity. Embodiments associated with the supportable access networks may include access networks which the M2M entity can access. That is, at step S510, NCS may receive a service class of a corresponding M2M application, access network information (i.e., information on supportable access networks), and/or location information, from DCS or GCS capabilities of the M2M entity. More specifically, an M2M device or gateway corresponding to an M2M entity may support a plurality of network interfaces (e.g., two or more network interfaces). In this case, information on supportable access networks and preference information associated with access networks may be configured and included, in form of resources in interfaces transmitted by an M2M entity.

At step S520, the M2M core may select an access network for a connection of the M2M entity (i.e., an access network to which the M2M entity can be connected), based on the received information. Herein, criteria by which the M2M core selects an access network among a plurality of access networks may include suitability for an M2M application service class, preference/supportability of the M2M entity, and a location of the M2M entity. Furthermore, a network status associated with the M2M entity and a network congestion of other M2M entities may be considered. At step S530, if an access network is selected by applying a variety of criteria described above, the M2M core may perform a setting for a network connection between the M2M entity and the selected access network by determining (or setting) a parameter for a connection to the selected access network.

In other words, as shown in FIG. 5, the M2M core may select an optimal access network, by analyzing service class properties, location information of an M2M device and/or an M2M gateway, and access network information (i.e., information on supportable access networks), based on information received from an M2M entity. Furthermore, the M2M core may perform a setting for a network connection of the M2M entity by setting a QoS parameter for the selected optimal access network.

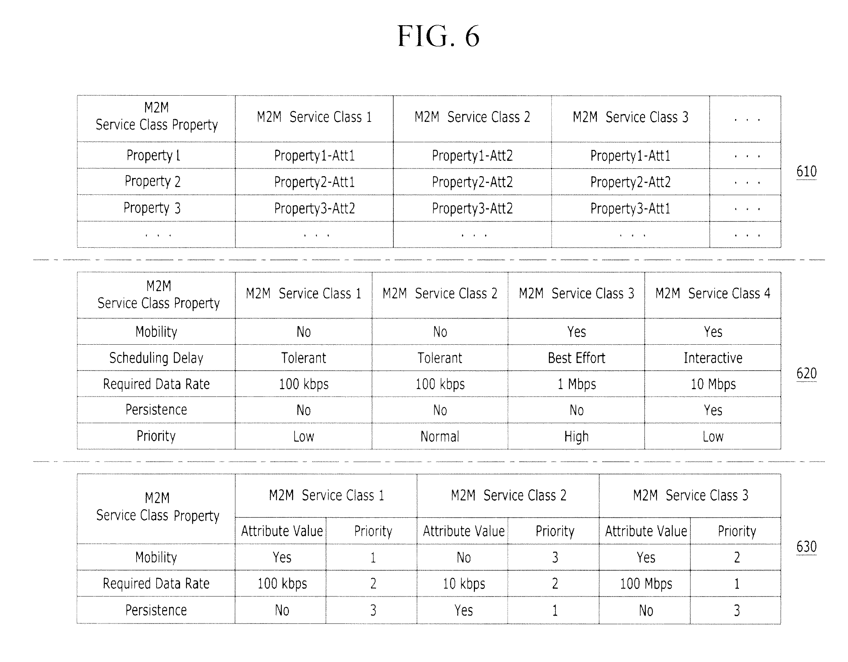

FIG. 6 is a diagram illustrating structures of service classes to which at least one embodiment of the present specification may be applied.

In FIG. 6, "610" shows a mapping between M2M service class properties and M2M service classes. That is, the M2M service classes may have attribute values associated with a variety of M2M service class properties. For example, M2M service class 1 may have an attribute value (e.g., "Property1-Att1") for a property (e.g., "Property1"). The M2M service class 1 may have an attribute value (e.g., "Property2-Att1") for a property (e.g., "Property2"). The M2M service class 1 may have an attribute value (e.g., "Property3-Att2") for a property (e.g., "Property3"). M2M service classes 2 and 3 may also have attribute values as described in "610", and therefore the detailed description thereof is omitted. Accordingly, a specific M2M service class may have specific attribute values associated with M2M service class properties.

In FIG. 6, "620" shows a first embodiment in which attribute values for properties per service class are determined. The properties per M2M service class may include "mobility," "scheduling delay (i.e., tolerable delay)," "required data rate," "persistence" (i.e., whether a connection is persistent), and "priority." Furthermore, in "620" of FIG. 6, four types of M2M service classes have attribute values for the above-described properties. For example, in case of M2M service class 1 of "620", (i) the property "mobility" may be determined as "NO," (ii) the property "scheduling delay" may be determined as "Tolerant," (iii) the property "required data rate" may be determined as "100kbps," (iv) the property "persistence" may be determined as "No," and (v) the property "priority" may be determined as "Low." M2M service classes 2, 3, and 4 may also have attribute values as described in "620", and therefore the detailed description thereof is omitted.

An M2M application may register a proper service class among service classes defined as described in "620" of FIG. 6. For example, in case of an application to which data transmission rate is important, M2M service class 1 or 2 of "620" may be selected. In case of an application to which a mobility support is important, M2M service class 3 or 4 of "620" may be selected.

All properties described above may not necessarily be defined in a service class, and only a part of properties may be defined. Furthermore, attribute values associated with the properties may be defined as a variety of information other than information defined in "620".

For example, as shown in "630", only required properties may be embodied, and priorities may be given to such properties. In case of M2M service class 1 of "630", (i) the property "mobility" may be determined as "Yes" and have the priority "1", (ii) the property "required data rate" may be determined as "100kbps" and have the priority "2", and (iii) the property "persistence" may be determined as "No" and have the priority "3". Accordingly, in case of M2M service class 1 of "630", "mobility" is the most important, and "required data rate " is the next most important property. In this case, "persistence" is less important than "mobility" and "required data rate." M2M service classes 2 and 3 may also have attribute values and priorities thereof as described in "630", and therefore the detailed description thereof is omitted.

Basically, M2M applications may require communications in order to transmit and receive data or information, and have different requirements according to communication connection characteristics. Particularly, in order to provide an optimal service based on cost, complexity, and performance associated with networks, communication connection characteristics required in the M2M applications may be required to be recognized. In other words, a proper network connection may be required to be provided by recognizing communication connection characteristics required to optimize a data transmission request of a specific M2M application.

"Mobility," "required data rate," "priority," "scheduling delay," and so forth may correspond to communication connection characteristics. With respect to such communication connection characteristics, there may be too many types to be individually managed per application. Furthermore, it may be difficult to manage such communication connection characteristics. Accordingly, as considered in FIG. 6, the communication connection characteristics may be classified into service classes, and be managed according to the classified service classes. In other words, M2M service classes shown in FIG. 6 may be defined using a set of pre-defined communication and connection characteristics. Each of the communication and connection characteristics may be defined as an M2M service property.

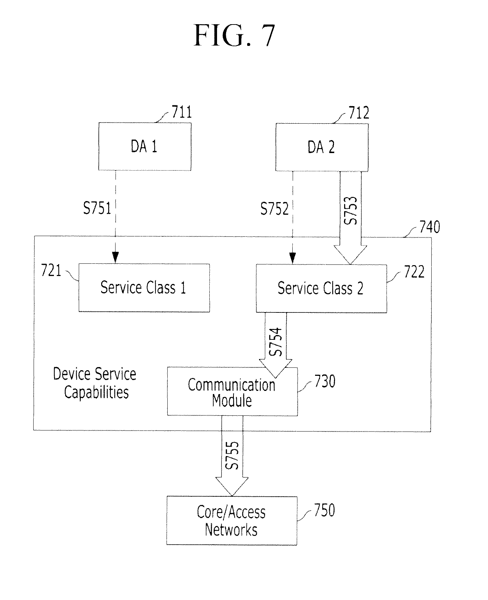

FIG. 7 is a diagram illustrating connections between applications and service classes to which at least one embodiment of the present specification may be applied. FIG. 7 will be described based on an M2M device. However, such descriptions will be applied to an M2M gateway in the same manner. FIG. 7 illustrates a scheme using M2M service classes, in order to select QoS related parameters of access networks based on service classes.

As shown in "620" or "630" corresponding to embodiments presented based on "610" of FIG. 6, a plurality of service classes may exist, and an M2M application may select at least one of the plurality of service classes. Furthermore, device communication selection (DCS) capabilities and/or gateway communication selection (GCS) capabilities may register service classes per application. Separate service capabilities supporting to perform an M2M application may register a service class for the M2M application, and provide information on the registered service class to DCS capabilities or GCS capabilities. Herein, the separate service capabilities may be different service capabilities other than the DCS capabilities and the GCS capabilities. In other words, in at least one embodiment, a service class registration and usage of information thereof described in the present specification may be performed in DCS capabilities or GCS capabilities. Alternatively, in other embodiments, separate service capabilities supporting to perform the M2M application may register a service class, and perform a corresponding application. In this case, separate service capabilities may provide service class information to the DCS capabilities and/or the GCS capabilities. FIG. 7 illustrates a case in which one application registers one service class.

First, at steps S751 and S752 corresponding to local registration operations, device applications (e.g., DA 1 (711) and DA2 (712)) may store an M2M service class associated with each application. More specifically, the application "DA1" (711) may register service class 1 (721), and the application "DA2" (712) may register service class 2 (722). Thereafter, the application "DA2" (712) may detect that a network connection is required to update resources associated with particular network service capabilities. In this case, at step S753, particular device service capabilities to use the particular network service capabilities may select service class 2 (722).

The particular device service capabilities may be one of capabilities forming device service capabilities 740. Device communication selection capabilities (DCSC) described in FIG. 4 may also be one of capabilities forming device service capabilities 740. As considered in FIG. 4, the DCSC may provide information on the selected service class 2 (722) to network communication selection capabilities (NCSC) of an M2M core such that a connection to an access network suitable for the service class 2 (722) can be performed. In other embodiments, the DCSC may transmit location information of an M2M device and information on supportable access networks, as well as a service class. Furthermore, various information which represents communication connection characteristics or is required to consider the communication connection characteristics may be transmitted to the NCSC. For example, the various information may include cost, complexity and performance associated with networks, a mobility, a required data rate, a priority, a scheduling delay, and so forth.

In other words, particular device service capabilities may set QoS parameter values suitable for an access network which the NCSC provides to the DCSC at step S754, and perform a connection at step S755. Herein, the access network may be selected according to service class properties (e.g., a scheduling delay, a required data rate, a persistence, a priority, and so forth) of service class 2 (722). Alternatively, the access network may include an access network suitable for location information, or supportable or preferred access networks. More specifically, at step S754, the DCSC or separate service capabilities supporting an execution of the application may set QoS parameter values suitable for the access network and the service class, and may perform a connection setting. In order to set QoS parameters of a corresponding access network, QoS values for each service class and each access network may be defined. In at least one embodiment, QoS values for service classes shown in "620" of FIG. 6 may be defined as described in Table 1 below.

**[Table 1]**

| **M2M Service Class** | **Access Network Technique A** | **Access Network Technique B** |
|---|---|---|
| 1 | QoS_Parameter1=x1 | ... |
| | QoS_Parameter2=y1 | |
| | QoS_Parameter3=z1 | |
| | ... | |
| 2 | QoS_Parameter1=x2 | ... |
| | QoS_Parameter2=y2 | |
| | QoS_Parameter3=z2 | |
| | ... | |
| 3 | QoS_Parameter1=x3 | ... |
| | QoS_Parameter2=y3 | |
| | QoS_Parameter3=z3 | |
| | ... kbps | |
| 4 | QoS_Parameter1=x4 | ... |
| | QoS_Parameter2=y4 | |
| | QoS_Parameter3=z4 | |
| | ... | |

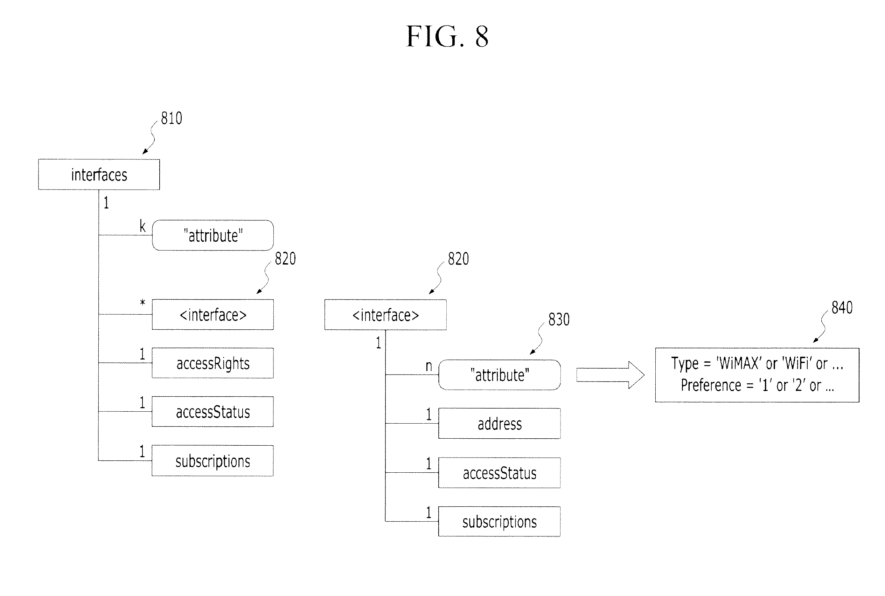

FIG. 8 is a diagram illustrating structures of interface resources of an M2M entity to which at least one embodiment of the present specification may be applied.

In FIG. 8, "810" illustrates a structure of "interfaces." The "interfaces" may include "attribute", <interface>, accessRights, accessStatus, subscriptions, and so forth. Herein, <interface> resource (820) may include information on supportable access networks according to at least one embodiment in the present specification. <interface> resource (820) may include "attribute" (830), address, accessStatus, subscriptions, and so forth. Herein, "attribute" (830) may include information described in "840". In other words, types of the supportable access networks may be determined as "WiMax," "WiFi", or the like. Preference of each supportable access network may be determined as the values "1", "2", or the like.

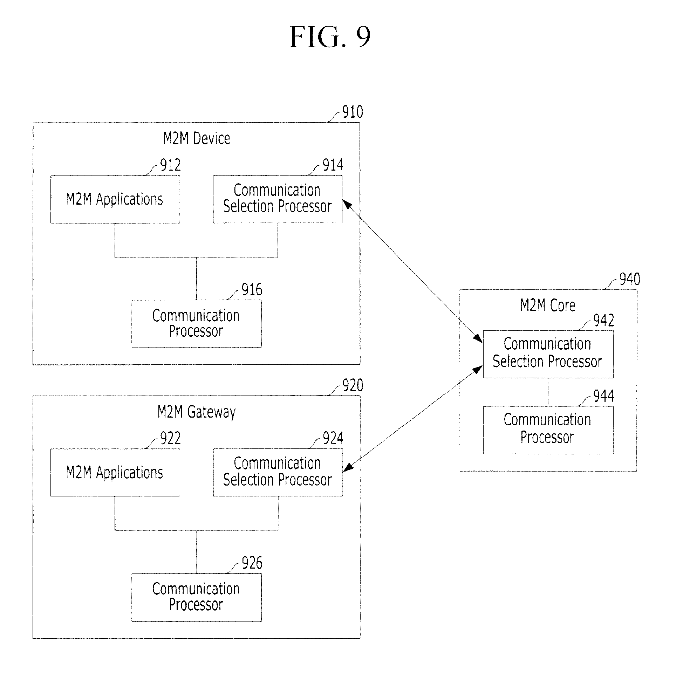

FIG. 9 is a diagram illustrating structures of an M2M entity and an M2M core in accordance with at least one embodiment of the present specification.

M2M device 910 corresponding to an M2M entity may include M2M applications 912, communication selection processor 914, and communication processor 916. Similarly, M2M gateway 920 corresponding to an M2M entity may include M2M applications 922, communication selection processor 924, and communication processor 926.

Communication selection processors 914 and 924 of the M2M entities may register service classes of M2M applications 912 and 922. Furthermore, in order to support a communication of the registered M2M application, communication selection processors 914 and 924 may transmit at least one of a service class for the M2M application, location information, and information on supportable access networks, to an M2M core (e.g., M2M core 940).

Communication processors 916 and 926 may perform a connection to an access network according to a connection setting of the M2M core. More specifically, communication processors 916 and 926 may be connected to an access network according to control of communication selection processors 914 and 924.

Since the operation of an M2M entity was already described with reference to FIG. 4, the detailed description thereof is omitted.

Meanwhile, M2M core 940 may include communication selection processor 942 and communication processor 944.

Communication processor 944 may receive at least one of (i) a service class for an M2M application to be performed by the M2M entity, (ii) location information, and (iii) information on supportable access networks, from an M2M entity.

Communication selection processor 942 may select an access network for connection of the M2M entity (i.e., an access network to which the M2M entity can be connected), based on the received information. Thereafter, communication selection processor 942 may perform a setting for a connection between the M2M entity and the selected access network by determining (or setting) a parameter (e.g., QoS parameter) for a connection to the selected access network.

In the present specification, various combinations of network characteristics may be classified and managed as service classes. In the case that specific service capabilities perform a setting and management of QoS values according to service classes, an access network may be dynamically selected. Accordingly, a dynamic selection of a specific access network may be performed through communication selection capabilities between an M2M entity (e.g., an M2M device or an M2M gateway) and an M2M core. Furthermore, QoS values for the selected access network may be selected (or determined). Such operations (e.g., an access network selection, a QoS setting, and so forth) may realize an optimal communication efficiency. In other embodiments, an access network may be selected based on a current location information of a corresponding M2M device (or M2M gateway) and information (e.g., a signal intensity) on supportable (i.e., available) access networks, as well as a service class. Accordingly, in this case, such functions (e.g., an access network selection) in M2M core capabilities may be more efficiently performed.

In other words, communication selection capabilities in an M2M device or gateway may transmit information on an access network connectable to a service class for a specific application (e.g., an M2M application), location information, and so forth, to network communication selection capabilities (NCSC). The NCSC may select (or determined) an optimal network connection scheme, based on a service class, location information of the M2M device (or gateway), and/or availability of access networks at a current location or time. Thereafter, the NCSC may perform a setting for a connection to a selected access network by determining (or setting) QoS parameter values associated with the selected access network.

As described above, since the technical idea of the present invention is described by exemplary embodiments, various forms of substitutions, modifications and alterations may be made by those skilled in the art from the above description without departing from essential features of the present invention. Therefore, the embodiments disclosed in the present invention are intended to illustrate the technical idea of the present invention, and the scope of the present invention is not limited by the embodiment. The scope of the present invention shall be construed on the basis of the accompanying claims in such a manner that all of the technical ideas included within the scope equivalent to the claims belong to the present invention.

### CROSS-REFERENCE TO RELATED APPLICATION

The present application claims priority under 35 U.S.C. § 119(a) to Korean Patent Application No. 10-2011-0045273 (filed on May 13, 2011), which is hereby incorporated by reference in their entirety. In addition, the present application claims priority in countries, other than U.S., with the same reason based on the Korean Patent Applications, which are hereby incorporated by reference in their entirety.

## Claims

1. A method of selecting a network in a machine to machine (M2M) communication, the method comprising:
transmitting, by an M2M entity, an interface resource to an M2M core, wherein the interface resource includes a service class for an M2M application and information on supportable access networks; and
performing, by the M2M entity, a connection to an access network, wherein the access network is selected by the M2M core, based on (i) information included in the interface resource and (ii) at least one of a network cost and location information.

2. The method of claim 1, wherein the service class is a communication connection characteristic for transmission and reception of data or information associated with the M2M application.

3. The method of claim 1, further comprising:
transmitting, by the M2M entity, location information of the M2M entity to the M2M core.

4. The method of claim 1, wherein the interface resource includes information on an access network preferred by the M2M entity.

5. A method of selecting a network in a machine to machine (M2M) communication, the method comprising:
receiving an interface resource from an M2M entity, wherein the interface resource includes a service class for an M2M application to be executed by the M2M entity, and information on supportable access networks;
selecting an access network to be connected by the M2M entity, based on (i) at least one of a network cost and location information and (ii) information included in the received interface resource; and
performing a connection setting between the M2M entity and the selected access network by determining a parameter for a connection to the selected access network.

6. The method of claim 5, wherein the service class is a communication connection characteristic for transmission and reception of data or information associated with the M2M application.

7. The method of claim 5, further comprising:
receiving the location information of the M2M entity from the M2M entity.

8. The method of claim 5, wherein the interface resource includes information on an access network preferred by the M2M entity.

9. An apparatus for implementing an M2M entity, the apparatus comprising:
a communication processor configured to transmit an interface resource to an M2M core, wherein the interface resource includes a service class for an M2M application, and information on supportable access networks; and
a communication selection processor configured to control the communication processor to connect to an access network, wherein the access network is selected by the M2M core, based on (i) information included in the interface resource and (ii) at least one of a network cost and location information.

10. An apparatus for implementing an M2M core, the apparatus comprising:
a communication processor configured to receive an interface resource from an M2M entity, wherein the interface resource includes a service class for an M2M application to be executed by the M2M entity and information on supportable access networks; and
a communication selection processor configured (i) to select an access network to be connected by the M2M entity, based on information included in the received interface resource and at least one of a network cost and location information, and (ii) to perform a connection setting between the M2M entity and the selected access network by determining a parameter for a connection to the selected access network.
